Europäisches Patentamt

European Patent Office

Office européen des brevets

(19)

(11) Veröffentlichungsnummer: **0 179 268**
**B1**

(12) **EUROPÄISCHE PATENTSCHRIFT**

(45) Veröffentlichungstag der Patentschrift: **11.07.90**

(21) Anmeldenummer: **85111714.3**

(22) Anmeldetag: **17.09.85**

(51) Int. Cl.⁵: **C 04 B 28/26** // (C04B28/26, 14:04, 18:24, 40:02)

(54) Verfahren zum Herstellen von Wärmedämmkörpern.

(30) Priorität: **12.10.84 DE 3437415**

(43) Veröffentlichungstag der Anmeldung:
**30.04.86 Patentblatt 86/18**

(45) Bekanntmachung des Hinweises auf die Patenterteilung:
**11.07.90 Patentblatt 90/28**

(84) Benannte Vertragsstaaten:
**AT BE CH FR GB IT LI NL SE**

(56) Entgegenhaltungen:
EP-A-0 007 585
DE-C- 481 611
DE-C- 621 341
DE-C-1 012 857
DE-C-1 259 761
FR-A-1 534 997
GB-A- 456 562
US-A-2 904 444

(73) Patentinhaber: **Silca Insulation bv**
**Wilhelminakanaal-zuid 110**
**Oosterhout (NL)**

(72) Die weiteren Erfinder haben auf ihre Nennung verzichtet

(74) Vertreter: **Schumacher, Horst, Dr. Dipl.-Phys.**
**Frühlingstrasse 43 (Ecke Holunderweg)**
**D-4300 Essen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 179 268 B1

**Beschreibung**

Die Erfindung betrifft ein Verfahren zum Herstellen von Wärmedämmköpern gemäß dem Oberbegriff von Patentanspruch 1.

Solche Wärmedämmkörper werden vor allem im Bereich des Ofen-, Anlagen- und Rohrleitungsbaus benötigt, z.B. in der Gestalt von Platten, Blöcken und Formteilen, welche dem auszukleidenden Ofen, dem zu umkleidenden Rohr und dgl. formschlüssig angepaßt sein können, um so eine allseitige, möglichst ununterbrochene Wärmedämmung zu gewährleisten.

In der DE—PS—10 12 857 wird die Herstellung einer Calziumsilikatmasse unter Verwendung von Kalk und Siliziumdioxid sowie wasserhaltigen Calziumhydrosilikaten als Suspendierungsmittel beschrieben, wobei zur Durchführung einer Vorreaktion (Wasserbindung zur Erzielung einer niedrigen Rohdichte) eine Temperatur von 66 bis 79°C durch Dosierung von heißem Wasser erforderlich ist.

Diese Maßnahme erscheint relativ aufwendig, zumal an das so hergestellte Produkt keine außergewöhnlichen Anforderungen hinsichtlich seiner physikalischen Eigenschaften gestellt werden.

In der DE—PS—28 32 125 wird ein Verfahren zur Herstellung feuerbeständiger Leichtbauplatten unter Ausschluß jeglicher äußeren Wärmeanwendung beschrieben. Diese Leichtbauplatten genügen den Anforderungen in dem für sie gedachten Anwendungsgebiet, nämlich dem Hochbau, wo diese Leichtbauplatten als nichttragende Wandelemente dienen und den sicherheitstechnischen Vorschriften für einen Brandfall genügen müssen. Aus dieser Patentschrift ist es bekannt, das Reaktionsprodukt aus im wesentlichen CaO, $SiO_2$ und Wasser nach einer Lagerungsphase zu formen, zu entwässern, einer hydrothermalen Härtung zu unterziehen und anschließend zu trocknen. Ferner ist es aus dieser Patentschrift bekannt, daß für den dort beschriebenen Verwendungszweck als CaO-Komponente Branntkalk, Kalkhydrat oder dgl. verwendbar ist und die $SiO_2$-Komponente anteilig aus kristallinem $SiO_2$ und amorphem $SiO_2$ bestehen kann; dabei soll der Anteil aus amorphem $SiO_2$ grundsätzlich auch aus einer Mischung von Wasserglas und Kieselsäure bereitgestellt werden können — allerdings werden für derartige Mischungen keine Angaben über mögliche prozentuale Zusammensetzungen und Reaktionsbedingungen gemacht noch ist ersichtlich, welche Eigenschaften die aus solchen Ausgangsmischungen hergestellten Leichtbauplatten besitzen. Bei diesem bekannten Verfahren ist es zur Erzielung der dort gewünschten Eigenschaften erforderlich, der Ausgangsmichung synthetisches Calziumsilikat zuzusetzen und die als Vorreaktion bezeichnete Lagerungsphase ohne jegliche äußere Wärmeanwendung durchzuführen. Derart hergestellte Calziumsilikatmassen haben sich für den Einsatz in Wärmedämmkörpern für Wärmedämmzwecke im Temperaturbereich zwischen etwa 800 und 1100°C als ungeeignet erwiesen, weil die für solche Wärmedämmkörper geforderten physikalischen Eigenschaften von ihnen nicht erreicht werden.

Aus der DE—PS—481 611 ist ein Verfahren zur Herstellung von Wärmedämmkörpern auf der Basis von Kalk oder ähnlich reaktiven Stoffen mit Alkalisilikat (Wasserglas) bekannt. Die Ausgangskomponenten reagieren sehr schnell und lassen "fast augenblicklich einen stark wasserhaltigen, voluminösen Körper entstehen". Die weitere Aushärtung wird durch langsames Trocknen erreicht, wobei anstelle des ausgetriebenen Wassers kleine Poren verbleiben. Eine hydrothermale Härtung findet offenbar nicht statt. Die Zusammensetzung des Ausgangsgemisches wird nicht angegeben; ebenso sind die Eigenschaften des fertigen Produktes nicht näher spezifiziert. Es wird lediglich angegeben, daß das dort beschriebene Wärmeschutzmittel, zwecks Festigkeitssteigerung, auf hohe Temperaturen bis zum Brennen und Sintern erhitzt werden kann. In diesem Fall dürfte die erfindungsgemäß geforderte Formstabilität, insbesonder eine lineare Schwindung von höchstens 2% nicht gewährleistet sein, da bei Temperaturen, die zum Brennen und Sintern führen, ein hochwasserhaltiges Calziumsilikat undefinierter Struktur entsteht. Derartige Wärmeschutzmittel sind daher für den erfindungsgemäßen Anwendungszweck nicht geeignet.

Aus der DE—AS—12 59 761 ist ein anderes Verfahren zur Herstellung von Dämmstoffen auf der Basis von Alkalisilikat bekannt, bei dem als Füllstoffe poröse Kunststoffteilchen in die Ausgangsmischung eingearbeitet werden. Die Aushärtung dieser Dämmstoffe erfolgt durch Lagerung bei Temperaturen unterhalb von 40°C, wobei diese Aushärtung sehr lange, nämlich mehr als 7 Tage dauert, wenn sie an Luft erfolgt, und eine abschließende Behandlung von 24 Stunden unter Vakuum erfordert. Die Lagerung an der Luft kann durch eine Lagerung in einer kohlensäurehaltigen Atmosphäre ersetzt werden. Eine hydrothermale Härtung wird in diesem Zusammenhang nicht beschrieben. Auch nach diesem bekannten Verfahren muß die Formgebung also vor der langen Lagerungsphase erfolgen, in welcher allmählich ein druckfester Formkörper geringen Raumgewichts entsteht. So hergestellte Dämmstoffe weisen zwar je nach den in ihnen enthaltenen Volumenanteilen der Kunststoffe und weiterer anorganischer Füllstoffe ein Raumgewicht zwischen 150 und 300 $kg/m^3$ auf und sie sollen auch bei längerer Dauerwärmebelastung maßstabil bleiben, doch wird über die tatsächliche Dauerwärmebelastbarkeit und die tatsächliche lineare Schwindung keine Aussage gemacht. Der Anwendungsbereich dieser Dämmstoffe im Bauwesen und in der Kältetechnik sowie als Verbundelemente deutet allerdings eindeutig darauf hin, daß an eine Verwendung bei Dauertemperaturen von oberhalb 800°C nicht gedacht wurde. Bei derart hohen Temperaturen kommt es für den aus dieser Druckschrift bekannten Dämmstoff offensichtlich nur darauf an, daß er eine im brandtechnischen Sinne ausreichende Schutzfunktion behält. Dieses bekannte Verfahren ist zudem wegen des erforderlichen Einsatzes von geblähten Kunststoffpartikeln hinsichtlich des einzusetzenden Rohmaterials und der Arbeitsmethode sehr aufwendig.

Schließlich sind aus der Druckschrift Baustoffe für die Wärmedämmung im Industrieofen- und Anlagenbau, 1977, Seiten 36 bis 41 und 96 bis 99, nach dem gattungsgemäßen Verfahren hergestellte Wärmedämmkörper bekannt, deren maximale Betriebstemperatur auf der hießen Seite auf 900°C begrenzt ist, wenn sie unmittelbar als Frontmaterial (exponierter Einsatz) eingesetzt werden. Allenfalls können Betriebstemperaturen von 950°C erreicht werden, nämlich dann, wenn sie als Hintermauerung von Stampfmassen, Feuerfestbeton und Feuerleichtsteinzustellungen eingesetzt werden. Derartige Wärmedämmkörper sollen nach 24-stündiger Dauertemperaturbelastung bei der jeweiligen Klassifizierungstemperatur eine lineare Schwindung von höchstens 2% haben. Die maximale Einsatztemperatur dieser Formkörper liegt bei 950°C, da bei der Klassifizierungstemperatur von 1000°C die lineare Schwindung bereits deutlich oberhalb von 2% liegt. Nach Überschreiten der Klassifizierungstemperatur bricht das Gefüge der Formkörper sofort zusammen. Derartige Wärmedämmkörper sind also für Wärmedämmzwecke in einem bis 1100°C reichenden Temperaturbereich nicht geeignet.

Davon ausgehend liegt der Erfindung die Aufgabe zugrunde, ein kostengünstiges Herstellungsverfahren für Wärmedämmkörper der eingangs genannten Art bereitzustellen, die eine Rohdichte von 150 bis 350 kg/m$^3$ aufweisen und deren lineare Schwindung nach einer 24-Stunden andauernden Temperaturbelastung von 1000°C höchstens 2% beträgt. Dabei wird unter "linearer Schwindung" nur die Längennicht aber die Dickenschwindung verstanden. Insbesondere sollen derartige Wärmedämmkörper mit toxikologisch unbedenklichen Armierungsmaterialien versehbar sein, wobei Asbest als Armierungsmaterial ausscheidet.

Als technische Lösung dieser Aufgabe wird ein gattungsgemäßes Verfahren mit den kennzeichnenden Merkmalen des Anspruchs 1 vorgeschlagen. Der Gewichtsanteil an amorphem $SiO_2$ beträgt vorzugsweise von 12 bis 18% und an $K_2O$ bzw. $Na_2O$ vorzugsweise 0,4 bis 0,6%. Zu Beginn der Lagerungsphase wird eine Temperatur von vorzugsweise 46 bis 50°C erreicht.

Die Erfindung basiert demnach auf dem Grundgedanken, bei einem Herstellungsverfahren der eingangs genannten Art, bei dem das Reaktionsprodukt nach einer Lagerungsphase ausgeformt, entwässert, einer hydrothermalen Härtung unterzogen und anschließend getrocknet wird, bei dem fernerhin die CaO-Komponente aus Branntkalk, Kalkhydrat oder dgl. und die $SiO_2$-Komponente anteilig aus kristallinem $SiO_2$ und amorphem $SiO_2$ besteht, den amorphen $SiO_2$-Anteil aus Wasserglas und Kieselsäure bereitzustellen und dem Reaktionsgemisch für die Lagerungsphase in dem Umfang äußere Wärme zuzuführen, daß seine Temperatur zu Beginn der Lagerungsphase zwischen etwa 40 bis 55°C liegt.

Derart hergestellte Wärmedämmkörper weisen eine Rohdichte zwischen 150 und 350 kg/m$^3$ und eine lineare Schwindung nach 24-stündiger Temperaturbelastung bei 1000°C von höchstens 2% auf, sie sind hinsichtlich der Ausgangsmaterialien besonders kostengünstig herzustellen und vor allem für die Anwendung im Ofen-, Anlagen- und Rohrleitungsbau in der Form von Platten, Blöcken oder Formteilen vor allem bei lang anhaltenden Temperaturbelastungen oberhalb 950°C bestens geeignet, und zwar für exponierten Einsatz ebenso, wie mit vorgehängter keramischer Faser oder hinter einer Schamotte-Fassade.

Um einen Wärmedämmkörper aus Calziumsilikat mit den gewünschten Eigenschaften zu erhalten, sind die erfindungsgemäßen Ausgangsbedingungen erforderlich, damit durch die hydrothermale Härtung im Temperaturbereich von etwa 190 bis 210°C ein Calziumsilikat mit einer Kristallstruktur von vorwiegend Xonotlit ($C_6S_6H$) erhalten wird. Hierfür hat sich als CaO-Komponente vor allem Branntkalk in der Form von Weißfeinkalk als vorteilhaft erweisen. Als kristalline $SiO_2$-Komponente kommt in erster Linie Quarzmehl in Frage. Als amorphe $SiO_2$-Komponente eignen sich für den Wasserglasanteil Natron- oder Kaliwasserglas, vorzugsweise wird Natronwasserglas verwendet; für die Kieselsäurekomponente kommen vor allem gefällte oder pyrogene Kieselsäure, vorzugsweise gefällte Kieselsäure in Frage. Am besten haben sich Kominationen aus Natronwasserglas und gefällter Kieselsäure erweisen. Diese Zusammensetzung der amorphen, reaktiven $SiO_2$-Komponente bildet in Verbindung mit Branntkalk und Wasser hochwasserhaltige Calziumsilikathydratphasen (CSH). Diese hochwasserhaltigen Calziumsilikathydratphasen sind notwendig, um niedrige Rohdichten in einem ausgeformten, hydrothermalgehärteten und anschließend getrockneten Calziumsilikatkörper zu erzielen.

Es hat sich herausgestellt, daß die Wasserglaskomponente, nur zu einem begrenzten Anteil im Ausgangsgemisch vorliegen darf, um die gewünscht hohen Anwendungsgrenztemperaturen zu erzielen. Z.B. verbleiben bei Zugabe von Natronwasserglas erhebliche Mengen an $Na_2O$ in den Calziumsilikat-Form-körpern, welches während der hydrothermalen Härtung in Calziumnatriumsilikat — Pektolith, $Ca_2NaH$ ($Si_3O_9$) — übergeht. Dieses führt bei zu hohen Anteilen in Calziumsilikat-Formkörpern zu einer unerwünschten Verminderung der maximalen Anwendungstemperatur. Andererseits soll der Kieselsäure-Anteil im Ausgangsgemisch ebenfalls nicht zu hoch liegen, da dies hinsichtlich der Kosten für die Ausgangsmaterialien unwirtschaftlich wäre.

Es hat sich überraschenderweise herausgestellt, daß diese Probleme überwunden und Wärmedämmkörper mit den geforderten physikalischen Eigenschaften erhalten werden, wenn — gemäß obigem Merkmal a) — der Gewichtsanteil an amorphem $SiO_2$ zwischen etwa 6 und 21 Gew.-%, bezogen auf das Calziumsilikat des Wärmedämmkörpers, beträgt und fernerhin der durch das Wasserglas in den Wärme-dämmkörper eingebrachte $K_2O$— bzw. $Na_2O$-Anteil in den Grenzen zwischen etwa 0,1 und 0,7 Gew.-% eingestellt wird; bevorzugt liegen die letztgenannten Werte zwischen 0,4 und 0,6%. Diese Werte werden durch entsprechende Auswahl des zur Anwendung kommenden Wasserglases und entsprechende Auswahl der Anteile des Wasserglases und der Kieselsäure an der amorphen $SiO_2$-Komponente, sowie

deren auf das Endprodukt bezogenen Gewichtsanteil erreicht. Es versteht sich, daß die auf das Gewicht des Endproduktes bezogenen Prozentangaben der einzelnen Komponenten in an sich bekannter Weise in die entsprechenden Anteile dieser Komponenten in der Ausgangsmischung umgerechnet werden müssen; dies geschieht vor allem unter Berücksichtigung der zugesetzten Wassermengen. Z.B. beträgt bei einer bevorzugten Ausführungsform der Erfindung der Grenzwert an $Na_2O$, resultierend aus Natronwasserglas, vorzugsweise 0,9 bis 1,3%, bezogen auf das nichtentwässerte Reaktionsprodukt. Nach der Entfernung von etwa 55% des ursprünglichen Mischwassers durch Abpressen betragen diese Werte dann nur noch 0,4 bis 0,6%, bezogen auf das Calziumsilikat des Wärmedämmkörpers. Diese Werte werden z.B. mit einem handelsüblichen Natronwasserglas erreicht, welches über einen möglichst niedrigen $Na_2O$-Anteil verfügt, z.B. mit der Zusammensetzung: 5,6% $Na_2O$, 21,9% $SiO_2$ und 72,5% Wasser.

Die bestmögliche Wasserverbindung wird gemäß einer Weiterbildung der Erfindung dadurch erreicht, daß der aus Wasserglas resultierende Gewichtsanteil an amorphem $SiO_2$, bezogen auf das Calziumsilikat des Wärmedämmkörpers, 1,0 bis 6,0% vorzugsweise 4,0 bis 5,5% beträgt. Demzufolge beträgt der aus gefällter Kieselsäure resultierende Gewichtsanteil an amorphem $SiO_2$, bezogen auf das Calziumsilikat des Wärmedämmkörpers 5 bis 15%, vorzugsweise 8,0 bis 12,5%.

Zur Erzielung der zu Beginn der Lagerungsphase erforderlichen Temperatur des Reaktionsgemisches wird, gemäß einer Weiterbildung der Erfindung, das Mischwasser auf etwa 32 bis 47°C, vorzugsweise 38 bis 42°C, vorgewärmt. Diese nach Einarbeiten der $SiO_2$-Komponenten, vor der Kalkzugabe im Wasser vorliegenden Temperatur aufgrund äußerer Wärmeanwendung erhöht sich nach der Kalkzugabe aufgrund der dann einsetzenden exothermen Reaktion der Mischungskomponenten auf die vor Beginn der Lagerungsphase gewünschte und erforderliche Temperatur von 40 bis 55°C. Diese letztgenannte Temperatur wird durch Verwendung eines wärmegedämmten Lagerungsbehälters, jedoch ohne weitere äußere Wärmeanwendung, möglichst lange aufrechterhalten, wobei die Lagerungsdauer, gemäß einer anderen Weiterbildung der Erfindung, mindestens 10 Stunden beträgt. Bei dieser Lagerungsphase hat es sich als besonders vorteilhaft erwiesen, wenn innerhalb des Lagerungsbehälters das Temperaturgefälle des Reaktionsgemisches so gering wie möglich gehalten wird, insbesondere sollte jegliches Rühren unterbleiben.

Als Armierungs- und/oder Füllstoff-Material haben sich vor allem Fasern oder dgl. aus Cellulose gewährt, die den Reaktionskomponenten vor der Reaktion zugemischt werden. Natürlich sind auch andere toxikologisch unbedenkliche Stoffe hierfür grundsätzlich verwendbar, jedoch meistens aufwendiger als Cellulose-Material und schlechter hinsichtlich der erzielbaren Eigenschaftsverbesserungen.

Die vorgenannten, erfindungsgemäß zu verwendenden Verfahrensschritte unterliegen hinsichtlich der Verfahrensbedingungen und einzusetzenden Reaktionskomponenten keinen weiteren Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung von Ausführungsbeispielen sowie aus weiteren Unteransprüchen.

Ausführungsbeispiele

### Beispiel 1

Cellulosefasern werden in der erforderlichen Wassermenge mit Hilfe eines leistungsstarken Dissoverrührwerks 15 Minunten lang aufgeschlämmt, anschließend erfolgte die Zugabe von Quarzmehl und Kieselsäure, dabei beträgt die Mischzeit weitere 3 Minuten.

Während dieser gesamten Zeit wird die Mischung mit Hilfe einer geeigneten Wärmequelle auf eine Temperatur von 32 bis 47°C, vorzugsweise 38 bis 42°C, erwämt.

Nach dem Erreichen dieser Temperatur wird Weißfeinkalk zugegeben und weitere 2 Minuten gemischt. Durch die exotherme Reaktion des Weißfeinkalkes erhöht sich die Temperatur der Mischung auf etwa 40 bis 55, vorzugsweise 46 bis 50°C.

Während der Kalkmischzeit wird Wasserglas zugegeben, dadurch entsteht eine Andickung, die eine pumpfähige Kosistenz nicht übersteigt.

Sofort nach Beendigung der Mischzeit wird der Calziumsilikatschlamm in einen geeigneten wärmegedämmten Reaktionsbehälter entleert und frühestens nach einer Ruhezeit (Lagerungsphase) von 10 Stunden in eine zur Verformung geeignete, an sich bekannte Siebpresse überführt.

Durch den anschließenden Preßvorgang wird die Calziumsilikatmasse entwässert, dabei werden 55% des ursprünglichen Mischwassers entfernt und gleichzeitig ein standfester Calziumsilikatkörper ausgeformt.

Bei der anschließenden hydrothermalen Härtung in einem geeigneten Autoklaven wird dieser Formkörper 10 Stunden lang einer Sattdampftemperatur von 205°C ausgesetzt.

Nach beendeter hydrothermalen Härtung werden die Calziumsilikatkörper bei einer Temperatur von 105°C bis zur Gewichtskonstanz getrocknet.

Weiter Verfahrensbedingungen und Ergebnisse ergeben sich aus der nachfolgenden Tabelle:

| | |
|---|---|
| Zellstoffasern | 6,0 % |
| Weißfeinkalk * | 48,2 % |
| Quarzmehl | 32,7 % |
| Kieselsäure, Type I | 8,0 % |
| $SiO_2$ aus Natronwasserglas ** | 5,1 % |
| | |
| Wasser/Feststoff-Faktor | 8,4 % |
| Temperatur der Mischung vor Kalkzugabe | 40 °C |
| | |
| * CaO-Anteil | 95,0 % |
| ** Natronwasserglas | 5,6 % $Na_2O$ |
| | 21,9 % $SiO_2$ |
| | 72,5 % $H_2O$ |

$Na_2O$-Gehalt aus Natronwasserglas

| | |
|---|---|
| 1. in der Calziumsilikatmasse | 1,3 % |
| 2. im entwässerten Formkörper | 0,6 % |

Formkörper, hydrothermalgehärtet
und getrocknet

| | |
|---|---|
| Rohdichte | 230 - 250 kg/m$^3$ |
| lineare Schwindung, 1000 °C/24 Std nach DIN 51066/T2 | 0,75 - 0,83 % |

Beispiel 2

Beispiel 1 wurde mit dem Unterschied wiederholt, daß der Kieselsäureanteil Typ I von 8 auf 10% angehoben wurde. Weiterhin wurde die menge an Natronwasserglas so vermindert, daß der Anteil an $Na_2O$ in der ungeformten Calziumsilikatmasse statt 1,3% nunmehr 1,1% beträgt, bzw. im entwässerten und ausgeformten Calziumsilikat-Körper statt 0,6% nunmehr 0,5% beträgt.

Weitere Verfahrensbedingungen und Ergebnisse ergeben sich aus der nachfolgenden Tabelle:

| | |
|---|---|
| Zellstoffasern | 6,0 % |
| Weißfeinkalk * | 48,2 % |
| Quarzmehl | 31,5 % |
| Kieselsäure Typ I | 10,0 % |
| $SiO_2$ aus Natronwasserglas ** | 4,3 % |
| Wasser/Feststoff-Faktor | 8,4 % |
| Temperatur der Mischung vor Kalkzugabe | 40 °C |
| | |
| * CaO-Anteil | |
| ** Natronwasser | analog Beispiel 1 |

5

Na$_2$O-Gehalt aus Natronwasserglas

    1. in der Calziumsilikatmasse             1,1 %

    .2. im entwässerten Formkörper         0,5 %


Formkörper, hydrothermalgehärtet

             und getrocknet


Rohdichte                                223 - 224 kg/m$^3$

lineare Schwindung, 1000 °C/24 Std     1,0 - 1,4 %

nach DIN 51066/T2

### Beispiel 3

Beispiel 2 wurde mit dem Unterschied wiederholt, daß der Kieselsäureanteil Typ I auf 11% angehoben wurde.

Weitere Verfahrensbedingungen und Ergebnisse ergeben sich aus der nachfolgenden Tabelle:

Zellstoffasern                             6,0 %

Weißfeinkalk *                         48,2 %

Quarzmehl                               30,5 %

Kieselsäure Type I                   11,0 %

SiO$_2$ aus Natronwasserglas **         4,3 %

Wasser/Feststoff-Faktor             8,4 %

Temperatur der Mischung vor Kalkzugabe    40 °C


\* CaO-Anteil             }

\*\* Natronwasserglas    }    analog Beispiel 1


Na$_2$O-Gehalt aus Natronwasserglas

    1. in der Calziumsilikatmasse             1,1 %

    2. im entwässerten Formkörper         0,5 %


Formkörper, hydrothermalgehärtet

             und getrocknet


Rohdichte                                201 - 212 kg/m$^3$

lineare Schwindung, 1000 °C/24 Std     1,2 - 1,5 %

nach DIN 51066/T2

### Beispiel 4

Beispiel 3 wurde mit dem Unterschied wiederholt, daß eine vom Wasserbindevermögen her qualitativ weniger wirksame gefällte Kieselsäure vom Typ II mit einem Anteil von 13% eingesetzt wurde.

Weitere Verfahrensbedingungen und Ergebnisse ergeben sich aus der nachfolgenden Tabelle:

| | |
|---|---|
| Zellstoffasern | 6,0 % |
| Weißfeinkalk * | 48,2 % |
| Quarzmehl | 28,5 % |
| Kieselsäure Type II | 13,0 % |
| $SiO_2$ aus Natronwasserglas ** | 4,3 % |

| | |
|---|---|
| Wasser/Feststoff-Faktor | 8,4 % |
| Temperatur der Mischung vor Kalkzugabe | 40 °C |

\* CaO-Anteil  
\*\* Natronwasserglas } analog Beispiel 1

<u>Na$_2$O-Gehalt</u> aus Natronwasserglas

| | |
|---|---|
| 1. in der Calziumsilikatmasse | 1,1 % |
| 2. im entwässerten Formkörper | 0,5 % |

<u>Formkörper</u>, hydrothermalgehärtet  
und getrocknet

| | |
|---|---|
| Rohdichte | 217 - 219 kg/m$^3$ |
| lineare Schwindung, 1000 °C/24 Std nach DIN 51066/T2 | 0,9 - 1,0 % |

Die auf die Zusammensetzung der Ausgangsmischung (Rezeptur) bzw. des Endproduktes bezogenen %-Angaben in den Beispielen bedeuten Gewichtsprozente, bezogen auf den Feststoffanteil der Ausgangsmischung bzw. das Calziumsilikat des Wärmedämmkörpers.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform eines wärmegedämmten Behälters für die Lagerungsphase im Vertikalschnitt dargestellt worden ist.

Der Lagerungsbehälter besteht aus einer Außenwandung mit Wärmedämmschicht 1, seinem Antrieb mit Getriebe 2 für ein Austragsrührwerk mit Gatter 3 und einem Absperrschieber mit Pumpe 4.

Der Lagerungsbehälter wird chargenweise von einem Mischer aus mit warmem Calziumsilikatschlamm gefüllt. Nach 10 Stunden Lagerungszeit wird das Rührwerk 3 kurz eingeschaltet, um den stark angedickten Calziumsilikatschlagg in eine fließ- und pumpfähige Konsistenz zu überführen; gleichzeitig wird eine bestimmte Menge zu einer Siebpresse hin mittels Pumpe 4 abgepumpt.

Dieser Vorgang wird bei jeder Befüllung der Siebpresse wiederholt, bis der Lagerungsbehälter entleert ist. Die Anordnung des Austragsrührwerkes am konischen Austragende des Lagerungsbehälters beläßt den darüber befindlichen Calziumsilikatschlamm im nichtverrührten Zustand.

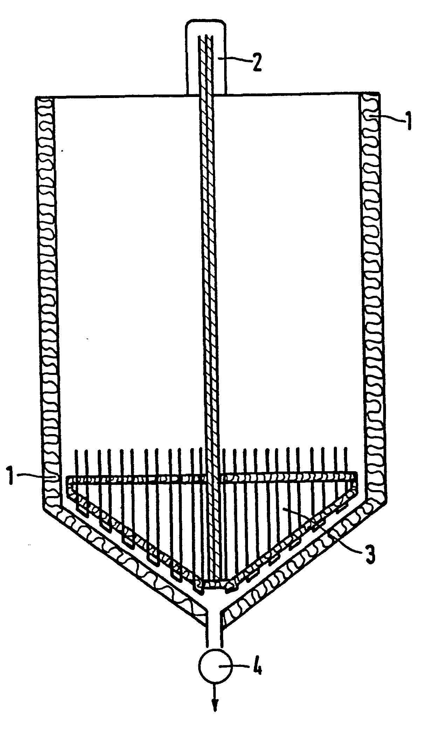

## Patentansprüche

1. Verfahren zum Herstellen von Wärmedämmkörpern für Wärmedämmzwecke im Temperaturbereich zwischen 800°C und 1100°C auf der Grundlage von Calziumsilikat, bei dem CaO und $SiO_2$ in einem Molverhältnis von etwa 0,9:1,0 bis 1,1:1,0 mit Wasser im Überschuß miteinander reagieren und nach Formgebung, Entwässerung, hydrothermaler Härtung und Trocknung die lineare Schwindung des so hergestellten Wärmedämmkörpers nach einer 24-Stunden andauernden Temperaturbelastung oberhalb von 800°C höchstens 2% beträgt und die CaO-Komponente aus Branntkalk, Kalkhydrat oder dgl. und die $SiO_2$-Komponente anteilig aus kristallinem $SiO_2$ und amorphem $SiO_2$ in Form von Wasserglas und Kieselsäure besteht, dadurch gekennzeichnet, daß

7

a) das Wasserglas und die Kieselsäure in einer solchen Menge zur Reaktion gebracht werden, daß, bezogen auf das Calziumsilikat des Wärmedämmkörpers, ein Gewichtsanteil von amorphem $SiO_2$ von 6 bis 21% und an $K_2O$ bzw. $Na_2O$ von 0,1 bis 0,7% erreicht wird,

b) das Ausgangsgemisch derart erwärmt wird, daß darin zu Beginn einer nachfolgend durchzuführenden, an sich bekannten, Lagerungsphase eine Temperatur von 40 bis 55°C erreicht wird und

c) das Reaktionsprodukt nach der Lagerungsphase in an sich bekannter Weise geformt, entwässert, der hydrothermalen Härtung unterzogen und anschließend getrocknet wird.

2. Verfahren nach Anspruch 1, dadurch gekennzeichnet, daß die Lagerungsphase in einem wärmegedämmten Behälter vorgenommen wird.

3. Verfahren nach Anspruch 1 oder 2, dadurch gekennzeichnet, daß ein Gewichtsanteil an amorphen $SiO_2$ 12 bis 18% erreicht wird.

4. Verfahren nach einem der Ansprüche 1 bis 3, dadurch gekennzeichnet, daß ein Gewichtsanteil an $K_2O$ bzw. $Na_2$ von 0,4 bis 0,6% erreicht wird.

5. Verfahren nach einem der Ansprüche 1 bis 4, dadurch gekennzeichnet, daß zu beginn der Lagerungsphase eine Temperatur von 46 bis 50°C erreicht wird.

6. Verfahren nach einem der Ansprüche 1 bis 5, dadurch gekennzeichnet, daß der aus Wasserglas resultierende Gewichtsanteil an amorphem $SiO_2$, bezogen auf das Calziumsilikat des Wärmedämmkörpers, 1,0 bis 6,0% beträgt.

7. Verfahren nach Anspruch 6, dadurch gekennzeichnet, daß der aus Wasserglas resultierende Gewichtsanteil an amorphen $SiO_2$ 4,0 bis 5,5% beträgt.

8. Verfahren nach einem Ansprüche 1 bis 7, dadurch gekennzeichnet, daß das Mischwasser auf 32 bis 47°C vorgewärmt wird.

9. Verfahren nach Anspruch 8, dadurch gekennzeichnet, daß das Mischwasser auf 38 bis 42°C vorgewärmt wird.

10. Verfahren nach einem der Ansprüche 1 bis 9, dadurch gekennzeichnet, daß die Lagerungsphase mindestens 10 Stunden andauert.

11. Verfahren nach einem der Ansprüche 1 bis 10, dadurch gekennzeichnet, daß den Reaktionskomponenten Fasern oder dgl. aus Cellulose zugemischt werden.

12. Verfahren nach einem der Ansprüche 1 bis 11, dadurch gekennzeichnet, daß die hydrothermale Härtung im Temperaturbereich von etwa 190 bis 210°C vorgenommen wird.

13. Verfahren nach einem der Ansprüche 1 bis 12, dadurch gekennzeichnet, daß als CaO-Komponente Branntkalk in der Form von Weißfeinkalk verwendet wird.

14. Verfahren nach einem der Ansprüche 1 bis 13, dadurch gekennzeichnet, daß als kristalline $SiO_2$-Komponente Quarzmehl verwendet wird.

15. Verfahren nach einem der Ansprüche 1 bis 14, insbesondere nach Anspruch 14, dadurch gekennzeichnet, daß als amorphe Kieselsäure-Komponente gefällte oder pyrogene Kieselsäure verwendet wird.

16. Verfahren nach einem der Ansprüche 1 bis 15, dadurch gekennzeichnet, daß als Wasserglas-Komponente Natronwasserglas und als amorphe Kieselsäure-Komponente gefällte Kieselsäure verwendet wird.

17. Verfahren nach einem der Ansprüche 1 bis 16, dadurch gekennzeichnet, daß die $Na_2O$-Komponente, resultierend aus Natronwasserglas, 0,9 bis 1,3% bezogen auf das nichtentwässerte Reaktionsprodukt beträgt.

18. Verfahren nach einem der Ansprüche 1 bis 17, dadurch gekennzeichnet, daß in der Entwässerungsphase etwa 55% des ursprünglichen Mischwassers entfernt wird.

19. Verfahren nach einem der Ansprüche 1 bis 18, dadurch gekennzeichnet, daß Natronwasserglas verwendet wird, das über einen $Na_2O$-Anteil von etwa 5,6% verfügt.

20. Verfahren nach einem der Ansprüche 1 bis 19, dadurch gekennzeichnet, daß Natronwasserglas verwendet wird mit einer Zusammensetzung von etwa 5,6% $Na_2O$, 21,9% $SiO_2$ und 72,5% Wasser.

21. Verfahren nach einem der Ansprüche 1 bis 20, dadurch gekennzeichnet, daß der aus gefällter Kieselsäure resultierende Gewichtsanteil an amorphem $SiO_2$, bezogen auf das Calziumsilikat des Wärmedämmkörpers 5 bis 15% beträgt.

22. Verfahren nach einem der Ansprüche 1 bis 20, dadurch gekennzeichnet, daß der aus gefällter Kieselsäure resultierende Gewichtsanteil an amorphem $SiO_2$, bezogen auf das Calziumsilikat des Wärmedämmkörpers 8,0 bis 12,0% beträgt.

23. Verfahren nach einem der Ansprüche 1 bis 22, dadurch gekennzeichnet, daß das Reaktionsgemisch während der Lagerungsphase auf einem über die Behälterabmessungen etwa konstanten Temperaturniveau gehalten wird.

24. Verfahren nach einem der Ansprüche 1 bis 23, dadurch gekennzeichnet, daß während der Lagerungsphase das Reaktionsgemisch in Ruhe gehalten wird.

## Revendications

1. Procédé de fabrication de corps calorifuges pour des applications en calorifugeage dans le domaine de température compris entre 800°C et 1100°C, lesquels sont à base d'un silicate de calcium dans lequel CaO et $SiO_2$ réagissent entre eux dans un rapport molaire d'environ 0,9:1,0 à 1,1:1,0 avec de l'eau en excès et, après façonnage, déshydratation, durcissement hydrothermal et séchage, le retrait linéaire du corps calorifuge ainsi fabriqué est de 2% maximum après une charge de température supérieure à 800°C, d'une durée de 24 heures et en ce que le constituant CaO comprend de la chaux vive, de la chaux éteinte ou analogues, et le constituant $SiO_2$ comprend proportionnellement du $SiO_2$ cristallin et du $SiO_2$ amorphe sous la forme de silicate alcalin et d'acide silicique, caractérisé en ce que

a) le silicate alcalin et l'acide silicique sont mis à réagir dans une quantité telle que par rapport au silicate de calcium du corps calorifuge, on atteigne une proportion pondérale de $SiO_2$ amorphe de 6 à 21% et de $K_2O$ ou de $Na_2O$ de 0,1 à 0,7%,

b) le mélange de départ est chauffé de telle sorte qu'on atteigne dans celui-ci, au début d'une phase de stockage connue en soi à effectuer ultérieurement, une température de 40 à 55°C, et

c) le produit de la réaction est moulé après la phase de stockage d'une manière connue en soi, déshydraté, soumis au durcissement hydrothermal, puis séché.

2. Procédé suivant la revendication 1, caractérisé en ce que la phase de stockage est effectuée dans un récipient calorifugé.

3. Procédé suivant les revendications 1 ou 2, caractérisé en ce qu'on atteint une proportion pondérale de $SiO_2$ amorphe de 12 à 18%.

4. Procédé suivant les revendications 1 à 3, caractérisé en ce qu'on atteint une proportion pondérale de $K_2O$ ou de $Na_2O$ de 0,4 à 0,6%.

5. Procédé suivant l'une des revendications 1 à 4, caractérisé en ce qu'au début de la phase de stockage, on atteint une température de 46 à 50°C.

6. Procédé suivant l'une des revendications 1 à 5, caractérisé en ce que la proportion pondérale de $SiO_2$ amorphe résultant du silicate alcalin est de 1,0 à 6,0% par rapport au silicate de calcium du corps calorifuge.

7. Procédé suivant la revendication 6, caractérisé en ce que la proportion pondérale de $SiO_2$ amorphe résultant du silicate alcalin est de 4,0 à 5,5%.

8. Procédé suivant l'une des revendications 1 à 7, caractérisé en ce que l'eau de mélange est préchauffée de 32 à 47°C.

9. Procédé suivant la revendication 8, caractérisé en ce que l'eau de mélange est préchauffée de 38 à 42°C.

10. Procédé suivant l'une des revendications 1 à 9, caractérisé en ce que la phase de stockage dure au moins 10 heures.

11. Procédé suivant l'une des revendications 1 à 10, caractérisé en ce qu'on ajoute aux constituants du mélange réactionnel des fibres ou analogues de cellulose.

12. Procédé suivant l'une des revendications 1 à 11, caractérisé en ce que le durcissement hydrothermal est effectué dans le domaine de température d'environ 190 à 210°C.

13. Procédé suivant l'une des revendications 1 à 12, caractérisé en ce que l'on utilise comme constituants CaO de la chaux vive sous la forme de chaux blanche pulvérisée.

14. Procédé suivant l'une des revendications 1 à 13, caractérisé en ce qu'on utilise comme constituants $SiO_2$ cristallin de la farine de quartz.

15. Procédé suivant l'une des revendications 1 à 14, en particulier suivant la revendication 14, caractérisé en ce qu'on utilise comme constituants acide silicique amorphe de l'acide silicique précipité ou obtenu par pyrogénation.

16. Procédé suivant l'une des revendications 1 à 15, caractérisé en ce qu'on utilise comme constituants silicate alcalin du silicate de sodium et comme constituant acide silicique amorphe de l'acide silicique précipité.

17. Procédé suivant l'une des revendications 1 à 16, caractérisé en ce que le constituant $Na_2O$, résultant du silicate de sodium s'élève à 0,9 à 1,3% par rapport au produit de réaction non déshydraté.

18. Procédé suivant l'une des revendications 1 à 17, caractérisé en ce que dans la pahse de déshydratation, environ 55% de l'eau de mélange initial sont éliminés.

19. Procédé suivant l'une des revendications 1 à 18, caractérisé en ce qu'on utilise un silicate de sodium qui dispose d'une proportion de $Na_2O$ d'environ 5,6%.

20. Procédé suivant l'une des revendications 1 à 19, caractérisé en ce qu'on utilise un silicate de sodium ayant la composition suivante: environ 5,6% de $Na_2O$, 21,9% de $SiO_2$ et 72,5% d'eau.

21. Procédé suivant l'une des revendications 1 à 20, caractérisé en ce que la proportion pondérale de $SiO_2$ amorphe résultant de l'acide silicique précipité, par rapport au silicate de calcium du corps calorifuge est de 5 à 15%.

22. Procédé suivant l'une des revendications 1 à 20, caractérisé en ce que la proportion pondérale de $SiO_2$ amorphe résultant de l'acide silicique précipité, par rapport au silicate de calcium du corps calorifuge est de 8,0 à 12,0%.

23. Procédé suivant l'une des revendications 1 à 22, caractérisé en ce que le mélange réactionnel est maintenu pendant la phase de stockage à un niveau de température à peu près constant sur les dimensions du récipient.

24. Procédé suivant l'une des revendications 1 à 23, caractérisé en ce que pendant la phase de stockage, le mélange réactionnel est maintenu au repos.

# EP 0 179 268 B1

**Claims**

1. A method for producing heat-insulating members for heat insulation purposes in the temperature range between 800°C and 1100°C on the basis of calcium silicate, in which CaO and $Si_2$ react together in a mol ratio of about 0.9:1.0 to 1.1:1.0 with water in excess, and, after shaping, dehydration, hydrothermal hardening and drying, the linear shrinkage of the heat-insulating member thus produced is at most 2% after a 24-hour-long temperature loading of above 800°C, and the CaO component is of caustic lime, calcium hydroxide or the like and the $SiO_2$ component is pro rata of crystalline $SiO_2$ and amorphous $SiO_2$ in the form of waterglass and silicic acid, characterised in that

a) the waterglass and the silicic acid are made to react in a quantity such as to achieve, related to the calcium silicate of the heat-insulating member, a part by weight of amorphous $SiO_2$ of 6 to 21% and of $K_2O$ or $Na_2O$ of 0.1 to 0.7%;

b) the initial mixture is heated in such a way that a temperature of 40 to 55°C is reached therein at the beginning of a storage phase, known per se, which is to be carried out subsequently, and

c) the reaction product, after the storage phase and in a way known per se, is shaped, dehydrated, subjected to hydrothermal hardening and then dried.

2. A method according to Claim 1, characterised in that the storage phase is carried out in a heat-insulated container.

3. A method according to Claim 1 or 2, characterised in that a part by weight of amorphous $SiO_2$ of 12 to 18% is achieved.

4. A method according to any one of Claims 1 to 3, characterised in that a part by weight of $K_2O$ or $Na_2O$ of 0.4 to 0.6% is achieved.

5. A method according to any one of Claims 1 to 4, characterised in that a temperature of 46 to 50°C is reached at the beginning of the storage phase.

6. A method according to any one of Claims 1 to 5, characterised in that the part by weight of amorphous $SiO_2$, resulting from waterglass, is 1.0 to 6.0% related to the calcium silicate of the heat-insulating member.

7. A method according to Claim 6, characterised in that the part by weight of amorphous $SiO_2$ resulting from waterglass is 4.0 to 5.5%.

8. A method according to any one of Claims 1 to 7, characterised in that the mixing water is pre-heated to 32 to 47°C.

9. A method according to Claim 8, characterised in that the mixing water is pre-heated to 38 to 42°C.

10. A method according to any one of Claims 1 to 9, characterised in that the storage phase lasts for at least 10 hours.

11. A method according to any one of Claims 1 to 10, characterised in that fibres or the like of cellulose are mixed with the reaction components.

12. A method according to any one of Claims 1 to 11, characterised in that the hydrothermal hardening is done in the temperature range of about 190 to 210°C.

13. A method according to any of Claims 1 to 12, characterised in that the CaO component used is caustic lime in the form of fine white lime.

14. A method according to any one of Claims 1 to 13, characterised in that the crystalline $SiO_2$ component used is quartz powder.

15. A method according to any one of Claims 1 to 14, in particular according to Claim 14, characterised in that the amorphous silicic acid component used is precipitated or pyrogenous silicic acid.

16. A method according to any one of Claims 1 to 15, characterised in that the waterglass component used is sodium waterglass and the amorphous silicic acid component used is precipitated silicic acid.

17. A method according to any one of Claims 1 to 16, characterised in that the $Na_2O$ component, resulting from sodium waterglass, is 0.9 to 1.3% related to the non-dehydrated reaction product.

18. A method according to any one of Claims 1 to 17, characterised in that about 55% of the original mixing water is removed in the dehydration phase.

19. A method according to any one of Claims 1 to 18, characterised in that the sodium waterglass used has a $Na_2O$ constituent of about 5.6%.

20. A method according to any one of Claims 1 to 19, characterised in that the sodium waterglass used has a composition of about 5.6% $Na_2O$, 21.9% $SiO_2$ and 72.5% water.

21. A method according to any one of Claims 1 to 20, characterised in that the part by weight of amorphous $SiO_2$, resulting from precipitated silicic acid, is 5 to 15% related to the calcium silicate of the heat-insulating member.

22. A method according to any one of Claims 1 to 20, characterised in that the part by weight of amorphous $SiO_2$, resulting from precipitated silicic acid, is 8.0 to 12.0% related to the calcium silicate of the heat-insulating member.

23. A method according to any one of Claims 1 to 22, characterised in that the reaction mixture is kept, during the storage phase, at a more or less constant temperature level over the dimensions of the container.

24. A method according to any one of Claims 1 to 23, characterised in that the reaction mixture is kept at rest during the storage phase.

10